# EUROPÄISCHE PATENTSCHRIFT

(11) **EP 1 453 704 B1**
(45) Veröffentlichungstag und Bekanntmachung des Hinweises auf die Patenterteilung: **08.11.2006**
(21) Anmeldenummer: 02779113.6
(22) Anmeldetag: 20.09.2002
(51) Int. Cl.: B60R 21/01

(54) **EINGABEVORRICHTUNG IN EINEM FAHRZEUG UND VERFAHREN ZUR INSASSENKLASSIFIZIERUNG**
INPUT DEVICE IN A MOTOR VEHICLE AND PASSENGER CLASSIFICATION METHOD
DISPOSITIF D'ENTREE DE DONNEES SITUE DANS UN VEHICULE A MOTEUR ET PROCEDE DE CLASSIFICATION DES OCCUPANTS

(30) Priorität: 30.11.2001 DE 10158989
(43) Veröffentlichungstag der Anmeldung: 08.09.2004
(73) Patentinhaber: ROBERT BOSCH GMBH, 70442 Stuttgart (DE)
(72) Erfinder: SCHMIED, Martin, 71642 Neckarweihingen (DE); MACK, Frank, 70376 Stuttgart (DE)
(86) Internationale Anmeldenummer: PCT/DE2002/003549
(87) Internationale Veröffentlichungsnummer: WO 2003/047915

(56) Entgegenhaltungen:
- EP-A- 0 924 123
- DE-A- 19 720 360
- DE-A- 19 856 129
- DE-A- 19 936 528

## Beschreibung

### Stand der Technik

Die Erfindung geht aus von einer Eingabevorrichtung in einem Fahrzeug beziehungsweise einem Verfahren zur Insassenklassifizierung nach der Gattung der unabhängigen Patentansprüche.

Aus DE 17920360 A1 ist es bereits bekannt, dass biomechanische Parameter mittels einer Tastatur durch den Benutzer in einem Fahrzeug eingegeben werden können. Aus DE 19936528 A1 (Oberbegriff von Anspruch 1) ist es bekannt, mittels eines Datenträgers Daten über Größe, Gewicht, Geschlecht und Alter in einem Fahrzeug dem Fahrzeug bekannt zu machen und das Gewichtsdatum mit einem automatisch ermittelten Sensorwert zu vergleichen, um zu erkennen, ob ein Missbrauch des Datenträgers durch andere Personen vorliegt.

### Vorteile der Erfindung

Die erfindungsgemäße Eingabevorrichtung in einem Fahrzeug beziehungsweise das erfindungsgemäße Verfahren zur Insassenklassifizierung mit den Merkmalen der unabhängigen Patentansprüche haben den Vorteil, dass die automatische Insassenklassifizierung durch eine Eingabe des Benutzers verbessert und optimiert wird. Damit kann ein Objekt beziehungsweise ein Insasse auf einem jeweiligen Fahrzeugsitz besser geschützt werden. Man schließt damit Falschklassifikationen durch das System der Innenraumsensierung aus. Die Daten, die der Fahrer eingegeben hat, werden im Steuergerät hinterlegt. Die Eingabemöglichkeit der Information über die Insassenklassifizierung wird hier mit einem Insassenklassifizierungssystem kombiniert. Erkennt das System der Innenraumsensierung oder Insassenklassifizierung, dass sich ein Objekt auf dem jeweiligen Sitz befindet, zum Beispiel mittels einer Sitzbelegungserkennung durch eine Sitzmatte, wird der Fahrer aufgefordert, bestimmte Informationen einzugeben. Erfolgt diese Eingabe durch den Fahrer, so prüft das Insassenklassifizierungssystem nur die Plausibilität der Eingabe und gibt eine Warnung aus, dass die Eingabe nicht plausibel ist. Es ist jedoch auch möglich, dass die Eingabe des Fahrers zur Plausibilisierung der mit dem Insassenklassifizierungssystem erzeugten Insassenklassifizierung verwendet wird.

Durch die in den abhängigen Ansprüchen aufgeführten Maßnahmen und Weiterbildungen sind vorteilhafte Verbesserungen der in den unabhängigen Patentansprüchen angegebenen Eingabevorrichtung in einem Fahrzeug beziehungsweise dem Verfahren zur Insassenklassifizierung möglich.

Besonders vorteilhaft ist, dass die erfindungsgemäße Eingabevorrichtung mit einem Steuergerät für Rückhaltemittel verbindbar ist, an die die Insassenklassifizierung übergeben wird, so dass eine adaptive Ansteuerung der Rückhaltemittel in einem Crashfall möglich ist.

Darüber hinaus ist von Vorteil, dass in Abhängigkeit von dem Vergleich der eingegebenen Insassenklassifizierung und der automatisch ermittelten Insassenklassifizierung gegebenenfalls eine erneute Aufforderung zur Eingabe ausgegeben wird, da voraussichtlich eine Falscheingabe vorliegt. Wurde jedoch die Eingabe als plausibel erkannt, wird eine von der eingegebenen Insassenklassifizierung und der automatisch ermittelten Insassenklassifizierung abgeleitete dritte Insassenklassifizierung an das Steuergerät übertragen.

### Zeichnung

Ausführungsbeispiele der Erfindung sind in der Zeichnung dargestellt und werden in der nachfolgenden Beschreibung näher erläutert. Es zeigen
Figur 1 ein Blockschaltbild der erfindungsgemäßen Eingabevorrichtung und
Figur 2 ein Flussdiagramm des erfindungsgemäßen Verfahrens zur Insassenklassifizierung.

### Beschreibung des Ausführungsbeispiels

Zunehmend soll eine Insassenklassifizierung in Fahrzeugen eingeführt werden, um eine adaptive Ansteuerung der Rückhaltemittel zu ermöglichen. Damit sollen unnötige Auslösungen verhindert werden, aber auch die Verletzungsgefahr, die durch Rückhaltemittel wie Airbags auftritt, reduziert werden.

Erfindungsgemäß wird nun auch beispielsweise der Fahrer aufgefordert, Eingaben zur Insassenklassifizierung einzugeben. Damit sollen insbesondere Fehlklassifizierungen durch die Innenraumsensierung vermieden werden. Die Eingabe des Benutzers wird durch entsprechende Begleitinformationen erleichtert. Beispielsweise wird auf einer Anzeige angezeigt, welche Klassen der Benutzer eingeben kann.

Eine Möglichkeit besteht darin, vier Klassen zu definieren. Klasse 1 behandelt einen Kindersitz und Personen bis zu 30 kg Körpergewicht. Dies hat zur Folge, dass ein Airbag für diesen Sitz nicht eingesetzt wird. Klasse 2 behandelt Personen von 30-60 kg. Hier wird ein leichter Airbag eingesetzt. Klasse 3 behandelt Personen von 60-90 kg. Hier wird ein Standardairbag eingesetzt. Die vierte und letzte Klasse behandelt Personen über 90kg. Hier ist ein starker Airbag erforderlich. Der Benutzer wird also eine der vier Klassen angeben, um die Insassen auf den einzelnen Sitzen zu klassifizieren. Dies hat den Vorteil, dass eine genaue Bestimmung des Insassen möglich wird und so Fehlerkennungen vermieden werden.

Die Information, die der Fahrer einzugeben hat, kann auch aus der Information "Airbag an" oder "Airbag aus" bestehen, aber es sind eben auch detailliertere Informationen über die genaue Gewichtsklasse wie oben angegeben möglich. Ein Vergleich der eingegebenen Klasse und der mit dem Insassenklassifizierungssystem automatisch ermittelten Klasse ermöglicht eine Plausibilisierung der Eingabe. Gibt ein Benutzer die Klasse 1 an und erkennt auch das Insassenklassifizierungssystem die Klasse 1, dann ist die Plausibilität gegeben, und an ein Steuergerät wird die Klasse 1 als Insassenklassifizierung übertragen. Gibt ein Benutzer die Klasse 1 an und das Insassenklassifizierungssystem erkennt aber die Klasse 2, ist keine Plausibilität gegeben, aber es wird die Klasse 1 an das Steuergerät übertragen, da die Klasse 1 die sensibelste Klasse ist, also die, die den Einsatz eines Airbags ausschließt. Dasselbe gilt auch, wenn das Insassenklassifizierungssystem die Klassen 3 oder 4 feststellt.

Gibt jedoch ein Benutzer die Klasse 2 an und erkennt das Insassenklassifizierungssystem die Klasse 1, ist ebenfalls keine Plausibilität gegeben, aber es wird hier die Klasse 2 angenommen und an das Steuergerät übertragen, da der Benutzer auf die Klasse 1, also die, die "Airbag aus" bedeutet, verzichtet hat. Dasselbe gilt für die automatisch erkannten Klassen 2, 3 und 4.

Gibt jedoch ein Benutzer die Klasse 3 an und erkennt das Insassenklassifizierungssystem die Klasse 1, wird auch hier der Eingabe der Vorrang eingeräumt und die Klasse 3 übertragen. Dasselbe gilt für alle anderen von der Insassenklassifizierung erkannten Klassen. Der Fall ist genauso, bei der Eingabe der Klasse 4. Auch die Klassifizierung "Airbag ein" oder "Airbag aus" gibt der Eingabe den Vorrang. Auch eine Kombination der Klassifizierung "Airbag aus" und "Airbag an" gibt der Eingabe den Vorrang, wobei bei "Airbag aus" immer die Klasse 1 erkannt wird und bei "Airbag an" wenigstens die Klasse 2 und ansonsten die von dem automatischen Insassenklassifizierungssystem erkannte Klasse.

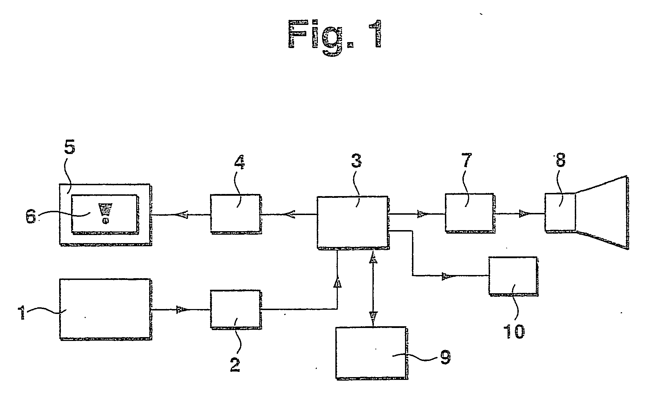

Figur 1 zeigt als Blockschaltbild die erfindungsgemäße Eingabevorrichtung. Eine Eingabevorrichtung 1, die haptische Eingabemittel beziehungsweise akkustische Eingabemittel aufweisen kann, ist an eine Signalverarbeitung 2 angeschlossen, die die Eingaben an der Eingabevorrichtung 1 verarbeitet. Diese verarbeiteten Eingabevorrichtungssignale werden dann an einen Prozessor 3 übertragen. Über einen ersten Datenausgang ist der Prozessor 3 mit einer Signalverarbeitung 4 verbunden, die eine Anzeige 5 mit einem Anzeigenfeld 6 treibt. Über einen zweiten Datenausgang ist der Prozessor 3 mit einer Audioansteuerung 7 verbunden, die einen Lautsprecher 8 ansteuert. Über einen dritten Datenausgang ist der Prozessor 3 mit einem Airbagsteuergerät 10 verbunden, um die erkannte Insassenklassifizierung an das Steuergerät 10 zu übertragen. Über einen Datenein-/-ausgang ist der Prozessor 3 mit einem Insassenklassifizierungssystem 9 verbunden, das in den einzelnen Sitzen beziehungsweise im Innenraum der Fahrgastzelle Sensoren aufweist, um die einzelnen Objekte auf den Sitzen zu erkennen. Alternativ ist es möglich, dass der Prozessor 3 in das Airbagsteuergerät 10 integriert ist.

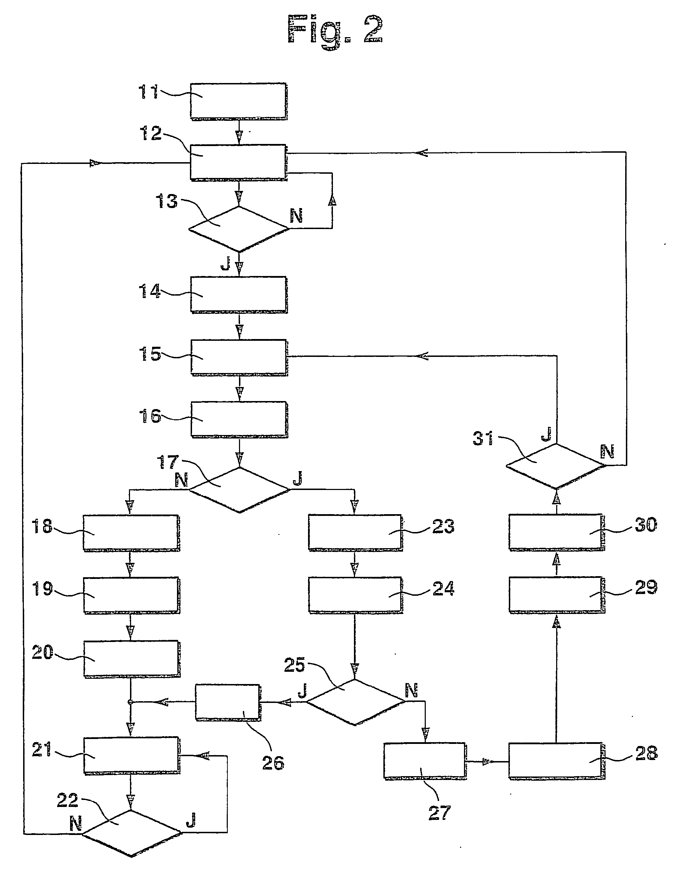

Das Flussdiagramm in Figur 2 erläutert das erfindungsgemäße Verfahren. In Verfahrensschritt 11 wird die Eingabevorrichtung eingeschaltet. In Verfahrensschritt 12 wird das Steuergerät 10 mit der Klasse 1 initialisiert und zwar für die einzelnen Sitze, so dass kein Airbag aktiviert wird. In Verfahrensschritt 13 wird das Insassenklassifizierungssystem 9 abgefragt, ob die einzelnen Sitze belegt sind. Der Prozessor 3 führt dieses erfindungsgemäße Verfahren durch. Ist keiner der Sitze belegt, wird zu Verfahrensschritt 12 zurückgesprungen. Wurde jedoch in Verfahrensschritt 13 festgestellt, dass wenigstens einer der Sitze belegt ist, dann wird in Verfahrensschritt 14 für den belegten Sitz die Klasse 2 angenommen, also dass der Sitz belegt ist und einen minimalen Schutz erhält. Dies wird an das Airbagsteuergerät 10 übertragen. Ein Zähler n für Rekursionen wird im Verfahrensschritt 14 auf Null gesetzt.

In Verfahrensschritt 15 ergeht eine Eingabeaufforderung an den Fahrer. Dazu wird die Anzeige 5 und auch der Lautsprecher 8 verwendet. In Verfahrensschritt 16 wird für eine vorgegebene Zeit gewartet, ob der Fahrer eine Eingabe macht. In Verfahrensschritt 17 wird dann überprüft, ob die Eingabe nach Ablauf dieser Zeit vorgenommen wurde. Wurde diese Eingabe vorgenommen, wird zur Verfahrensschritt 23 weitergesprungen. In Verfahrensschritt 23 wird die eingegebene Klasse abgespeichert. In Verfahrensschritt 24 wird die durch das Insassenklassifizierungssystem ermittelte Klasse abgefragt. In Verfahrensschritt 25 erfolgt der Vergleich der eingegebenen Klasse und der durch das Insassenklassifizierungssystem 9 ermittelten Klasse. Das Ergebnis des Vergleichs ist die Plausibilität wie oben dargestellt.

Wurde keine Plausibilität erkannt, wird in Verfahrensschritt 27 ein Warnsignal, beispielsweise mit dem Lautsprecher 8, ausgegeben. In Verfahrensschritt 28 wird der Zähler für die Rekursion erhöht. In Verfahrensschritt 29 wird die eingegebene Klasse an das Airbagsteuergerät übertragen. In Verfahrensschritt 30 erfolgt eine Abfrage des Insassenklassifizierungssystems und in Verfahrensschritt 31 wird festgestellt, ob der jeweilige Sitz belegt ist. Ist der Sitz belegt, wird zu Verfahrensschritt 15 zurückgesprungen. Ist der Sitz nicht belegt, wird zu Verfahrensschritt 12 gesprungen.

Wurde jedoch in Verfahrensschritt 17 festgestellt, dass keine Eingabe erfolgt ist, dann wird in Verfahrensschritt 18 ein Warnsignal ausgegeben. In Verfahrensschritt 19 erfolgt die Klassifizierung durch das Insassenklassifizierungssystem 9. In Verfahrensschritt 20 wird die so ermittelte Klasse als weiter zu verwendende Klasse definiert. In Verfahrensschritt 21 wird diese Klasse an das Steuergerät 10 übertragen. In Verfahrensschritt 22 wird überprüft, ob der Sitz belegt ist. Ist das der Fall, wird zu Verfahrensschritt 21 zurückgesprungen, wenn nicht, wird zu Verfahrensschritt 12 gesprungen.

Wurde in Verfahrensschritt 25 festgestellt, dass die Plausibilität der eingegebenen Klasse und der durch das Insassenklassifizierungssystem 9 ermittelten Klasse gegeben ist, wird zu Verfahrensschritt 26 gesprungen. Die an das Steuergerät 10 zu übertragende Klasse wird aus der eingegebenen Klasse und der ermittelten Klasse, wie oben dargelegt, bestimmt. Dann wird zu Verfahrensschritt 21 gesprungen, um diese ermittelte Klasse an das Airbagsteuergerät 10 zu übertragen.

## Patentansprüche

1. Eingabevorrichtung in einem Fahrzeug, wobei ein mit der Eingabevorrichtung (1) verbundenes Insassenklassifizierungssystem (9) automatisch eine erste Insassenklassifizierung vornimmt, wobei eine Eingabe mit der automatisch erzeugten ersten Insassenklassifizierung verglichen wird, **dadurch gekennzeichnet, dass** die Eingabevorrichtung (1) mit einer Anzeige (5) und/oder einem Lautsprecher (8) verbunden ist, die die Eingabe mit der Eingabe vorrichtung (1) bezüglich einer zweiten Insassenklassifizierung für wenigstens einen Sitz anfordern, wobei die Eingabevorrichtung derart konfiguriert ist, dass eine Insassenklasse eingegeben wird, und dass ein Warnsignal mit dem Lautsprecher (8) ausgegeben wird, wenn die erste mit der zweiten Insassenklassifizierung nicht übereinstimmt.

2. Eingabevorrichtung nach Anspruch 1, **dadurch gekennzeichnet, dass** die Eingabevorrichtung (1) mit einem Steuergerät (10) für Rückhaltemittel verbindbar ist, an das die eingegebene oder automatisch ermittelte oder eine davon abgeleitete Insassenklassifizierung für den wenigstens einen Sitz übertragen wird.

3. Verfahren zur Insassenklassifizierung, wobei eine automatische erste Insassenklassifizierung mit einem Insassenklassifizierungssystem (9) erfolgt und wobei eine Eingabe mit der automatisch erzeugten ersten Insassenklassifizierung verglichen wird, **dadurch gekennzeichnet, dass** ein Benutzer zur Eingabe für die zweite Insassenklassifizierung für den wenigstens einen Sitz aufgefordert wird, und dass eine Insassenklasse eingegeben wird und dass ein Warnsignal ausgegeben wird, wenn die erste Insassenklassifizierung mit der zweiten Insassenklassifizierung nicht übereinstimmt.

4. Verfahren nach Anspruch 3, **dadurch gekennzeichnet, dass** in Abhängigkeit von dem Vergleich eine erneute Aufforderung zur Eingabe ausgegeben wird oder eine von der ersten und zweiten Insassenklassifizierung abgeleitete dritte Insassenklassifizierung an das Steuergerät (10) übertragen wird.

## Claims

1. Input device in a vehicle, the vehicle occupant classification system (9) which is connected to the input device (1) automatically carrying out a first vehicle occupant classification, an input being compared with the automatically generated, first vehicle occupant classification, **characterized in that** the input device (1) is connected to a display (5) and/or a loudspeaker (8) which request the input device (1) to make an input with respect to a second vehicle occupant classification for at least one seat, the input device being configured in such a way that a vehicle occupant class is input, and **in that** a warning signal is output with the loudspeaker (8) if the first vehicle occupant classification does not correspond to the second vehicle occupant classification.

2. Input device according to Claim 1, **characterized in that** the input device (1) can be connected to a control device (10) for restraint means to which the vehicle occupant classification which has been input or automatically determined or an vehicle occupant classification which is derived therefrom for the at least one seat is transmitted.

3. Vehicle occupant classification method, an automatic, first vehicle occupant classification being automatically carried out with a vehicle occupant classification system (9), and an input being compared with the automatically generated, first vehicle occupant classification, **characterized in that** a user is requested to make an input for the second vehicle occupant classification for the at least one seat, and **in that** a vehicle occupant class is input, and **in that** a warning signal is output if the first vehicle occupant classification does not correspond to the second vehicle occupant classification.

4. Method according to Claim 3, **characterized in that** a renewed request to make an input is output as a function of the comparison, or a third vehicle occupant classification which is derived from the first and second vehicle occupant classifications is transmitted to the control device (10).

## Revendications

1. Dispositif d'entrée de données dans un véhicule, un système de classification des occupants (9) relié au dispositif d'entrée de données (1) procédant automatiquement à une première classification des occupants, une entrée de données étant comparée à la première classification automatique des occupants,
**caractérisé en ce que**
le dispositif d'entrée de données (1) est relié à un écran d'affichage (5) ou à un haut-parleur (8) qui sollicitent l'entrée de données avec le dispositif d'entrée de données (1) par rapport à une deuxième classification des occupants pour au moins un siège, le dispositif d'entrée de données étant configuré pour enregistrer une catégorie d'occupants, et un signal d'alarme est émis par le haut-parleur (8) lorsque la première classification des occupants ne coïncide pas avec la deuxième.

2. Dispositif d'entrée de données selon la revendication 1,
**caractérisé en ce que**
le dispositif d'entrée de données (1) peut être relié à un appareil de commande (10) pour moyens de retenue sur lequel la classification des occupants enregistrée ou déterminée automatiquement ou en étant déduite est transmise pour l'au moins un siège.

3. Procédé de classification des occupants, une première classification automatique des occupants (9) ayant lieu avec un système de classification des occupants, et une donnée entrée étant comparée avec la première classification automatique des occupants,
**caractérisé en ce qu'**
un utilisateur est sollicité pour enregistrer les données pour la deuxième classification des occupants pour l'au moins un siège, une catégorie d'occupants est enregistrée et un signal d'alarme est émis lorsque la première classification des occupants ne coïncide pas avec la deuxième classification des occupants.

4. Procédé selon la revendication 3,
**caractérisé en ce qu'**
en fonction de la comparaison, une nouvelle sollicitation pour l'enregistrement de données est émise ou une troisième classification des occupants dérivée de la première et de la deuxième classification des occupants est transmise à l'appareil de commande (10).
